# EUROPEAN PATENT APPLICATION

(11) **EP 4 712 501 A1**
(43) Date of publication of application: **18.03.2026**
(21) Application number: 24806889.2
(22) Date of filing: 04.04.2024
(51) Int. Cl.: H04Q 9/00

(54) **EDGE MODULE, CONTROL SYSTEM, REMOTE CONTROL SYSTEM, CONTROLLER, AND COMMUNICATION METHOD**

(30) Priority: 12.05.2023 JP 2023079703
(71) Applicant: KABUSHIKI KAISHA TOSHIBA, Minato-ku Tokyo 105-0023 (JP)
(72) Inventor: HAGIWARA Tsuyoshi, Kawasaki-shi, Kanagawa 212-0013 (JP)
(74) Representative: AWA Sweden AB
(86) International application number: PCT/JP2024/013969
(87) International publication number: WO 2024/236935

(57) **Abstract**

[Problem] Provided is an edge module, a control system, a remote control system, a controller, and a communication method that enable fixed-cycle processing.

[Solution to Problem] An edge module according to an embodiment includes: a data generator configured to generate first data including a serial number; a transmitter configured to assign a first timestamp to the first data and transmit the first data to a controller; a receiver configured to receive second data generated by the controller based on the first data, the second data including the serial number and the first timestamp, and to obtain a second timestamp corresponding to a reception time of the second data; and an abnormality detector configured to determine whether communication with the controller was successfully performed based on at least one of: (i) the serial number included in the second data, and (ii) a difference between the first timestamp included in the second data and the second timestamp.

## Description

### [Technical Field]

An embodiment of the present invention relates to an edge module, a control system, a remote control system, a controller, and a communication method.

### [Background Art]

A control system for an industrial plant or the like is constructed by connecting an edge system that includes equipment to be controlled (target equipment) and sensors that measure values related to the control, and a controller for controlling the target equipment based on the output from the sensors.

When the controller and the edge system are connected by a local LAN, the communication between them is high-speed and simultaneity is ensured. When the controller is a physical machine, the generation of control data for the edge system and the output to the edge system can be completed within one scan cycle (one operation cycle). Therefore, it is possible to perform fixed-cycle processing.

In contrast, migrating the controller to the cloud has advantages such as reducing the initial installation and update costs of the control system, and improving the flexibility and operability of the control system configuration. However, when the controller is deployed in the cloud, simultaneity cannot be guaranteed because the edge system and the controller communicate via the Internet, which tends to introduce high network latency. In addition, since the cloud environment cannot provide as many computational resources as physical machines connected via a local LAN, it may not be possible to complete the generation of control data for the edge system and the output to the edge system within a single scan cycle. As a result, the time required for each process varies, and fixed-cycle processing becomes infeasible.

### [Citation List]

### [Patent Document]

Patent Document 1: JP 2021-525044
Patent Document 2: JP 2021-121065
Patent Document 3: JP 2018-152675

### [Summary of Invention]

### [Technical Problem]

An embodiment of the present invention provides an edge module, a control system, a remote control system, a controller, and a communication method that enable fixed-cycle processing.

### [Solution to Problem]

An embodiment of the present invention provides an edge module including: a data generator configured to generate first data including a serial number; a transmitter configured to assign a first timestamp to the first data and transmit the first data to a controller; a receiver configured to receive second data generated by the controller based on the first data, the second data including the serial number and the first timestamp, and to obtain a second timestamp corresponding to a reception time of the second data; and an abnormality detector configured to determine whether communication with the controller was successfully performed based on at least one of: (i) the serial number included in the second data, and (ii) a difference between the first timestamp included in the second data and the second timestamp.

### [Brief Description of the Drawings]

FIG. 1 is a block diagram illustrating a remote control service according to the first embodiment.
FIG. 2 is a block diagram illustrating a remote control system according to the first embodiment.
FIG. 3 is a diagram illustrating the format of data.
FIG. 4 is a sequence diagram illustrating the processing performed by the remote control system of the first embodiment.
FIG. 5 is a sequence diagram illustrating another process performed by the remote control system of the first embodiment.
FIG. 6 is a diagram illustrating the processing performed by the abnormality detector.
FIG. 7 is a block diagram illustrating a remote control system according to a variation of the first embodiment.
FIG. 8 is a sequence diagram illustrating the processing performed by a remote control system according to a variation of the first embodiment.
FIG. 9 is a block diagram illustrating a remote control system according to the second embodiment.
FIG. 10 is a sequence diagram illustrating the processing performed by the remote control system of the second embodiment.

### [Description of Embodiments]

The following is a description of the embodiment of the invention with reference to the drawings.

### (First embodiment)

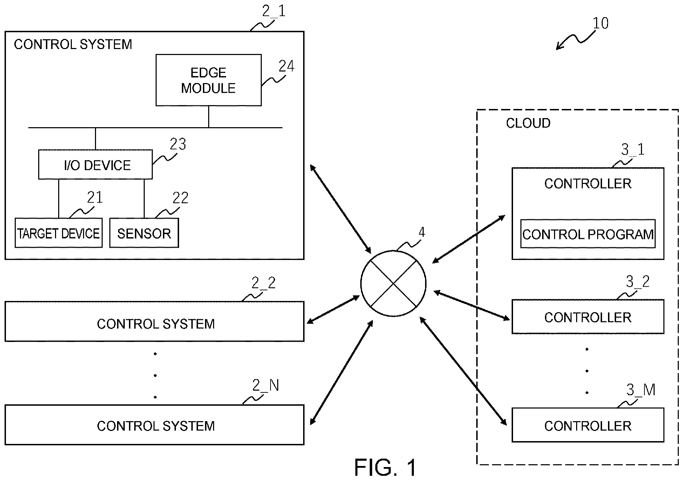

FIG. 1 is a block diagram of a remote control service 10 of the first embodiment. The remote control service 10 has a plurality of control systems 2_1 to 2_N, a plurality of controller virtual machines (controllers) 3_1 to 3_M, and a communication network 4. Hereinafter, one of the plurality of control systems 2_1 to 2_N will simply be denoted as control system 2, and one of the plurality of controllers 3_1 to 3_M will simply be denoted as controller 3. The remote control service 10 is a service for controlling a plurality of devices (target devices 21) provided by an industrial plant or the like.

The control system 2 includes a target device 21 to be controlled, a sensor 22 (measurement device), an I/O device 23, and an edge module 24. The control system 2 is an edge-side control system that transmits measurement data acquired by the sensor 22 to the controller 3, and actually controls the target device 21 based on control data received from the controller 3. The measurement data is an example of first data transmitted from the edge module 24 to the controller 3, and the control data is an example of second data transmitted from the controller 3 to the edge module 24.

The target device 21 is a device that forms part of an industrial plant. Examples of the target device 21 include a valve, a pump, a heat exchanger, and a mixer.

The sensor 22 measures values related to the control of the target device 21 and outputs them as measurement signals (analog signals). The sensor 22 may monitor the operation of the target device 21 itself, or the operation of another device associated with the target device 21. The sensor 22 may be integrated into the target device 21 or may be installed at a location physically separated from the target device 21. A single control system 2 may include a plurality of sensors 22. For example, when the target device 21 is a pump, the sensor 22 may be a flow meter.

The I/O device 23 is a device that performs input and output operations with the target device 21 and the sensor 22, which are components of the plant. For example, the I/O device 23 collects measurement signals from the sensor 22 and outputs them to the edge module 24. It also outputs control signals received from the edge module 24 to the target device 21 to control its operation.

The edge module 24 is an electronic device that generates measurement data based on measurement signals from the sensor 22 and generates control signals based on control data from the controller 3. The edge module 24 also performs communication with the controller 3.

The controller 3 receives measurement data from the control system 2 and generates control data for controlling the target device 21 based on the measurement data. The controller 3 also transmits the control data to the control system 2. In the present embodiment, the controller 3 is implemented as a virtual machine deployed in the cloud (cloud server), but it may alternatively be implemented as a physical machine.

The communication network 4 connects a plurality of control systems 2_1 to 2_N and controllers 3_1 to 3_M. In the present embodiment, the communication network 4 is implemented as the Internet; however, other types of communication networks may also be employed.

Each of the control systems 2_1 to 2_N exchanges data with the controllers 3_1 to 3_M. A pair consisting of one control system 2 and one controller 3 that exchanges data with the control system 2 is referred to as a remote control system 1. In other words, the remote control service 10 includes a plurality of remote control systems 1.

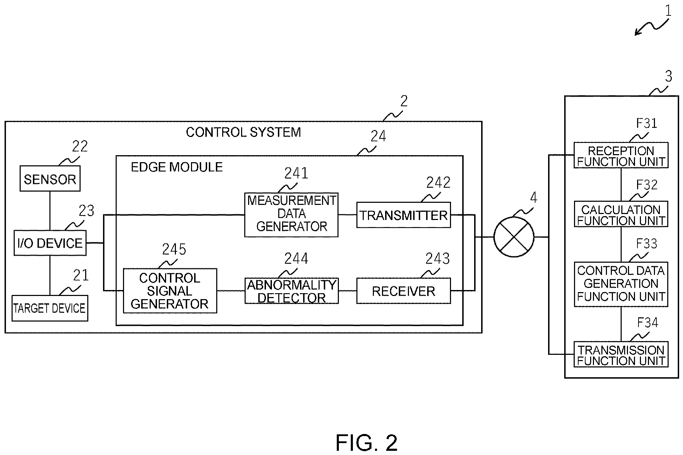

FIG. 2 is a block diagram illustrating an example of the remote control system 1 according to the first embodiment. It should be noted that FIG. 2 does not imply a one-to-one correspondence between a specific control system 2 and a specific controller 3. In other words, the controller 3 corresponding to a given control system 2 is not fixed. For example, a target device 21 of control system 2_3 may be controlled based on measurement data acquired from a sensor 22 of a different control system 2_2. In such a case, a control system 2 may be configured without the target device 21 or the sensor 22.

The remote control system 1 is a system in which the controller 3 generates control data based on measurement signals from the sensor 22 and controls the target device 21 based on the generated control data.

The edge module 24 includes a measurement data generator 241, a transmitter 242, a receiver 243, an abnormality detector 244, and a control signal generator 245.

The measurement data generator 241 acquires measurement signals from the I/O device 23 and generates measurement data. For example, it may convert analog measurement signals into digital signals to generate measurement data. Alternatively, it may generate measurement data based on a plurality of measurement signals obtained from a plurality of sensors 22.

The transmitter 242 assigns a first timestamp to the measurement data and transmits it to the controller 3 via the communication network 4. The receiver 243 receives control data transmitted from the controller 3 via the communication network 4 and obtains a second timestamp corresponding to the time at which the control data was received.

The abnormality detector 244 determines whether communication between the edge module 24 and the controller 3 was successfully performed, based on the received control data. Specifically, it determines whether the processing by the controller 3 was completed without excessive delay, and whether both the transmission of the measurement data and the reception of the corresponding control data were performed without excessive delay.

The abnormality detector 244 may also determine whether an emergency situation exists, based on the number of abnormality occurrences detected during operation of the remote control system 1. The number of occurrences may be, for example, an average number per fixed period of time.

The control signal generator 245 generates control signals based on the received control data. When the abnormality detector 244 determines that an emergency condition exists, the control signal generator 245 may generate emergency control signals. The emergency control signals may include, for example, a command to immediately stop the target device 21 or to activate a safety device.

At least some of the elements 21-23 and 241-245 may be implemented using circuits or processors such as an ASIC (Application Specific Integrated Circuit) or FPGA (Field-Programmable Gate Array). Alternatively, some or all of these elements may be implemented by a CPU executing a program.

The controller 3 includes a reception function unit F31, a calculation function unit F32, a control data generation function unit F33, and a transmission function unit F34. In other words, the controller 3 performs these function units as a virtual entity operating in the cloud.

The reception function unit F31 receives measurement data transmitted from the edge module 24 via the communication network 4.

The transmission function unit F34 transmits control data to the edge module 24 via the communication network 4.

The calculation function unit F32 processes the measurement data received by the reception function unit F31. For example, the calculation function unit F32 may analyze the measurement data to determine whether the target device 21 is operating normally or whether the measurement data contains any abnormal values.

The control data generation function unit F33 generates control data for controlling the target device 21 based on the processing results from the calculation function unit F32. The control data generation function unit F33 generates one set of control data based on one set of measurement data, for example, one data packet.

The controller 3 executes a control program to perform various processes, including the function units F31 to F34. The control program is executed in a predetermined scan cycle. The scan cycle includes, for example, a refresh period, a calculation period for executing the control program, and an END processing period.

In the present embodiment, the controller 3 is implemented on a cloud server realized by a hardware configuration including a control unit such as an MPU and a storage device. The storage device may include a memory device such as ROM (Read Only Memory) or RAM (Random Access Memory), an external storage device such as an HDD or CD drive, or a combination thereof. The cloud server may further include a display device, such as a monitor, and an input device, such as a keyboard or mouse.

The control program executed by the controller 3 in the present embodiment may be provided as a file in an installable or executable format, recorded on a computer-readable recording medium such as a DVD (Digital Versatile Disk), a USB flash drive, a solid-state drive (SSD), or the like.

Alternatively, the control program executed by the controller 3 may be stored on a computer connected to a network such as the Internet and may be downloaded via the network. The control program may also be provided pre-installed in a ROM or similar non-volatile memory.

In the present embodiment, when the controller 3 receives measurement data, it performs a calculation and generates control data during the next scan cycle. Then, in a subsequent scan cycle, the controller 3 transmits the generated control data to the edge module 24. That is, the generation and transmission of control data are performed in different scan cycles. This configuration allows the time from control data generation to transmission to remain constant (i.e., one scan cycle), as long as no excessive delay occurs within the controller 3, thereby reducing variation in processing time.

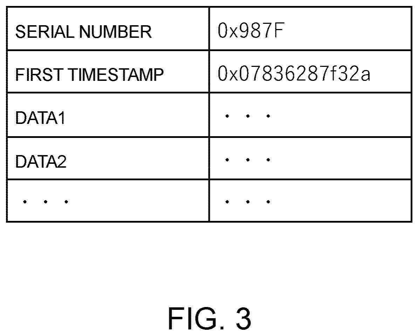

FIG. 3 illustrates the format of the measurement data and the control data. For example, these types of data are generated in the form of packets. As shown in FIG. 3, both the measurement data and the control data include a serial number (i.e., a first serial number), a first timestamp, and a payload (e.g., data 1, data 2, and so on).

The serial number is a value assigned to the measurement data by the measurement data generator 241. It is used by the abnormality detector 244 for the purpose of detecting anomalies. In the example shown in FIG. 3, the data is assigned the serial number "0x987F". For example, the serial number may be derived from a counter value of a PLC (Programmable Logic Controller) included in the measurement data generator.

The first timestamp is the time at which the transmitter 242 transmits the measurement data. It may alternatively be the time at which the measurement data is generated by the measurement data generator 241. In the example shown in FIG. 3, the data with serial number "0x987F" was transmitted at time "0x07836287f32a".

The payload is the main content of the measurement data or the control data. For example, the payload of the control data may include an instruction to stop the target device 21.

### (Operation Example 1)

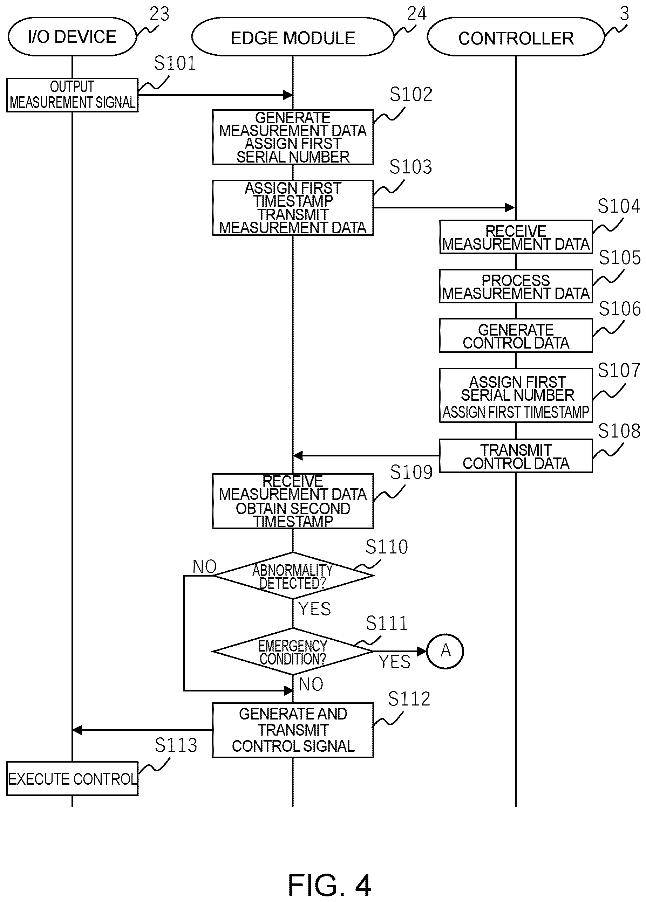

An overview of the overall process performed by the remote control system 1 is provided below. FIG. 4 is a sequence diagram illustrating the operation of the remote control system 1 under normal conditions (i.e., when no emergency situation occurs). With reference to FIG. 4, an example of the operation of the remote control system 1 will be described.

First, the I/O device 23 outputs the measurement signal obtained from the sensor 22 to the edge module 24 (Step S101).

Next, the measurement data generator 241 generates measurement data based on the input measurement signal. In this step, the measurement data generator 241 assigns a first serial number to the generated measurement data (Step S102).

Next, the transmitter 242 transmits the measurement data to the controller 3. In this step, it assigns a first timestamp to the measurement data and transmits it (Step S103).

Next, the controller 3, functioning as the reception function unit F31, receives the measurement data (Step S104). Then, functioning as the calculation function unit F32, the controller 3 processes the measurement data (Step S105). Since the controller 3 processes the measurement data at each predetermined calculation cycle, a wait time of up to one scan cycle may occur between the completion of Step S104 and the start of Step S105.

Next, the controller 3, functioning as the control data generation function unit F33, generates control data for controlling the target device 21 based on the processing results of Step S105 (Step S106).

Next, the controller 3, functioning as the control data generation function unit F33, assigns a serial number and the first timestamp to the generated control data (Step S107). These values are identical to the serial number and the first timestamp included in the measurement data corresponding to the control data.

Next, the controller 3, functioning as the transmission function unit F34, transmits the control data to the edge module 24 (Step S108). Step S108 is performed during a scan cycle that is different from the one in which Step S107 was executed.

Next, the receiver 243 receives the control data and obtains a second timestamp corresponding to the time at which the control data was received (Step S109).

Next, the abnormality detector 244 determines, based on the received control data, whether communication with the controller 3 was successfully performed (Step S110). If no abnormality is detected (Step S111: No), the process proceeds to Step S112.

If an abnormality is detected (Step S110: Yes), the abnormality detector 244 determines whether an emergency situation exists (Step S111). If the situation is not determined to be an emergency (Step S111: No), the process proceeds to Step S112. If the situation is determined to be an emergency, the process proceeds to Step A.

Next, the control signal generator 245 generates control signals based on the received control data and transmits the control signals to the I/O device 23 (Step S112).

Next, the I/O device 23 receives the control signal and controls the target device 21 based on the control signal (Step S113).

### (Operation Example 2)

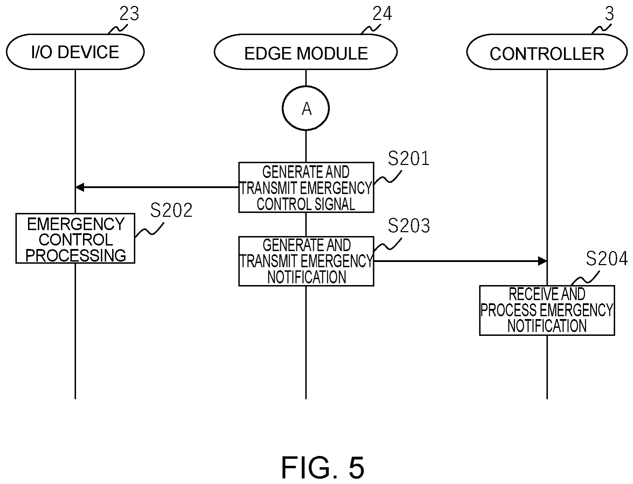

Next, the processing performed by the remote control system 1 in the case of an emergency situation (Step A and thereafter) will be described. FIG. 5 is a sequence diagram illustrating the operation of the remote control system 1 during an emergency situation. With reference to FIG. 5, an example of the operation of the remote control system 1 will be explained. The operations prior to Step A are the same as those in FIG. 4 and will not be repeated here.

First, if the abnormality detector 244 determines that the situation is an emergency, the process proceeds to Step S201. This corresponds to Step A.

Next, the control signal generator 245 generates emergency control signals and transmits them to the I/O device 23 (Step S201). The emergency control signals may include, for example, a command to stop the target device 21 or to activate a safety device. The I/O device 23 then controls the target device 21 based on the received emergency control signals (Step S202).

Next, the edge module 24 generates an emergency notification and transmits it to the controller 3 in order to notify that an emergency situation has occurred (Step S203).

The controller 3 then receives and processes the emergency notification (Step S204). It may then notify the user that an emergency condition has occurred, or attempt to recover the control system 2.

As described above, the remote control system 1 performs communication between the edge module 24 and the controller 3 to control the target device 21. Furthermore, by detecting an emergency situation on the edge side, the system can respond quickly in the event of an emergency.

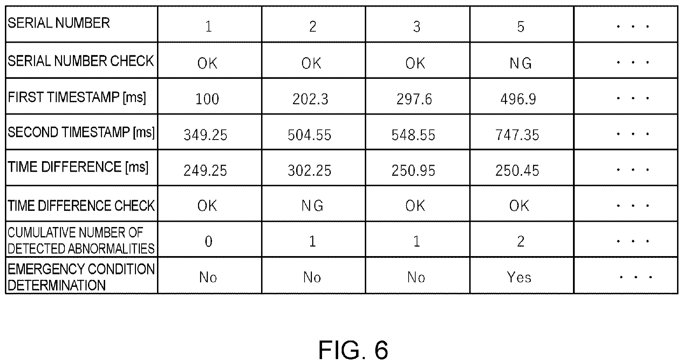

FIG. 6 illustrates the processing performed by the abnormality detector 244 in Steps S110 and S111. With reference to FIG. 6, the processing executed by the abnormality detector 244 will now be described.

The abnormality detector 244 determines whether communication with the controller 3 was successfully performed based on at least one of the following: (i) the serial number included in the control data, and (ii) the difference between the first timestamp and the second timestamp. More specifically, the abnormality detector 244 determines that an abnormality has occurred if at least one of the following conditions is met: (i) the serial number in the control data is missing, or (ii) the difference between the first and second timestamps exceeds a predetermined delay threshold. If an abnormality is detected a predetermined number of times (e.g., once or multiple times), the abnormality detector 244 determines that an emergency condition exists. If an emergency is declared after a single detection, the system can respond quickly. If the emergency is declared after multiple detections, accidental or temporary anomalies can be filtered out.

The difference between the first and second timestamps corresponds to the elapsed time from the start of Step S103 to the completion of Step S109 (see FIG. 4).

The time from the start of measurement data processing to the start of control data transmission (i.e., from Step S105 to Step S108) is expected to be one scan cycle, provided that no excessive delay occurs within the controller 3.

The waiting time from the completion of measurement data reception to the start of its processing (i.e., from Step S104 to Step S105) may be up to one scan cycle.

In addition, the total communication time between the edge module 24 and the controller 3-i.e., from the start of Step S103 to the completion of Step S104, and from the start of Step S108 to the completion of Step S109-is assumed to be less than one scan cycle under normal conditions.

Taking these into account, the difference between the first and second timestamps is expected to fall within three scan cycles if communication is operating normally.

In the example shown in FIG. 6, one scan cycle is 100 ms. Therefore, the predetermined delay threshold is set to, for example, 300 ms. The control data with serial number 2 (i.e., control data 2) is determined to be abnormal by the abnormality detector 244 because the time difference between the first and second timestamps is 302.25 ms. However, at the time of this judgment, the cumulative number of detected abnormalities is only one, so an emergency condition is not declared. The control data with serial number 5 (i.e., control data 5) is also determined to be abnormal because the previous control data has serial number 3. At this point, the total number of detected abnormalities reaches two, and the abnormality detector 244 determines that an emergency condition exists.

As described above, the measurement data is assigned a first timestamp and a first serial number, and the control data generated based on the measurement data is also assigned the same first timestamp and first serial number. Accordingly, when the control data is received, an abnormality can be detected if communication between the edge module 24 and the controller 3 was unsuccessful, based on either the difference between the first and second timestamps or a mismatch in the serial numbers. This also enables fixed-cycle processing to be achieved within the remote control system 1.

To check the difference between the first and second timestamps, the first timestamp may be stored within the edge module 24. When the control data is received, the edge module 24 may compare the stored first timestamp with the second timestamp included in the control data.

### (Modification)

In the above description, the abnormality detector 244 included in the edge module 24 determines whether an emergency condition exists. However, this determination may alternatively be made by the controller 3. Allowing the controller 3 to make this determination enables a more comprehensive judgment that takes into account the overall state of the remote control service 10.

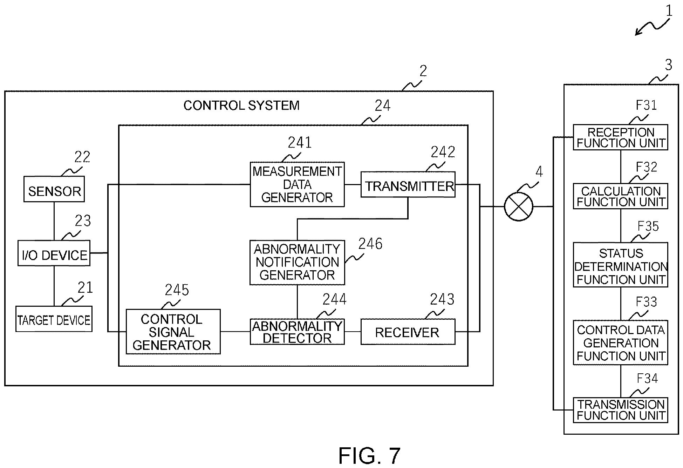

FIG. 7 is a block diagram illustrating a variation of the remote control system 1 according to the first embodiment. Elements having the same names or functions as those in FIG. 2 of the first embodiment are denoted by the same reference numerals. The following description omits any explanation of elements that are unchanged, and focuses only on modifications and additions.

The edge module 24 includes an abnormality notification generator 246. When the abnormality detector 244 detects an abnormality, the notification generator 246 generates an abnormality notification for notifying the controller 3. The generated notification is transmitted to the controller 3 by the transmitter 242, received by the reception function unit F31, and processed by the calculation function unit F32.

The controller 3 includes a status determination function unit F35. The function unit F35 determines whether an emergency condition exists based on the number of abnormality notifications received and processed. When the number of received notifications reaches a predetermined threshold (e.g., once or multiple times), it determines that an emergency condition exists. If the status determination function unit F35 determines that the situation is an emergency, the control data generation function unit F33 generates emergency control data. The function unit F33 may also generate such data after referencing the status of other remote control systems 1 based on information received from other controllers 3. This configuration can prevent, for example, adverse effects on another target device 21 caused by the shutdown of a particular target device 21.

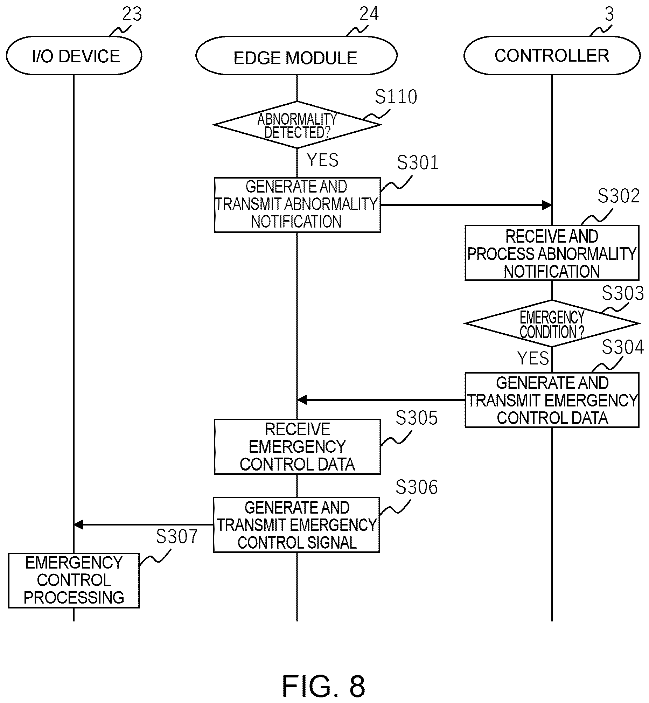

FIG. 8 is a sequence diagram illustrating the operation of the remote control system 1 according to this modification. With reference to FIG. 8, an example of the operation of the system will be described. Operations prior to Step S110 (i.e., when the result is "No") are the same as those in FIG. 4 and are omitted from the following description.

First, the abnormality detector 244 detects that an abnormality has occurred (Step S111: Yes).

Next, the abnormality notification generator 246 generates an abnormality notification to report the occurrence of an abnormality and transmits it to the controller 3 (Step S301).

Next, the controller 3, functioning as the reception function unit F31, receives the abnormality notification. Then, functioning as the calculation function unit F32, the controller 3 processes the received notification (Step S302).

Next, the controller 3, functioning as the status determination function unit F35, determines whether an emergency condition exists based on the number of abnormality notifications received (Step S303: Yes).

Next, the controller 3, functioning as the control data generation function unit F33, generates emergency control data to perform control appropriate for the emergency condition. Then, functioning as the transmission function unit F34, the controller 3 transmits the emergency control data to the edge module 24 (Step S304). The emergency control data may include, for example, a command to stop the target device 21 or to activate a safety device.

Next, the receiver 243 receives the emergency control data (step S305). Then, the control signal generator 245 generates emergency control signals based on the emergency control data and transmits them to the I/O device 23 (step S306).

Next, I/O device 23 controls target device 21 (step S307).

### (Second Embodiment)

In the first embodiment, a method was described in which the edge module 24 performs fixed-cycle processing in coordination with the controller 3. In the present embodiment, a method is described in which the controller 3 confirms, from its own side, whether communication with the edge module 24 has been successfully completed.

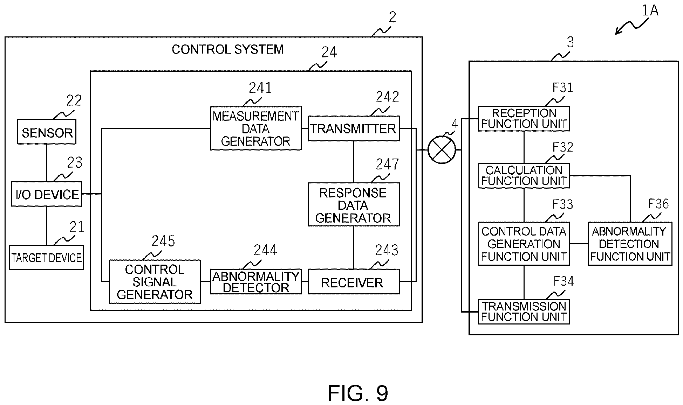

FIG. 9 is a block diagram illustrating the remote control system 1A according to the second embodiment. Elements having the same names or functions as those in FIG. 2 of the first embodiment are denoted by the same reference numerals. The following description omits explanation of elements that remain unchanged, and focuses only on modifications and additions.

The control data generation function unit F33 assigns a second serial number to the control data when generating the control data. This second serial number is unique to the controller 3 and is distinct from the first serial number assigned to the measurement data by the measurement data generator 241.

The transmission function unit F34 assigns a third timestamp to the control data as the time at which it is transmitted. Alternatively, the time at which the control data is generated by the control data generation function unit F33 may be used as the third timestamp.

The edge module 24 includes a response data generator 247. When the receiver 243 receives control data, the response data generator 247 generates response data. It assigns the second serial number and the third timestamp to the response data. The response data is then transmitted to the controller 3 by the transmitter 242. Its format is the same as that of the measurement data or control data shown in FIG. 3. The response data serves as an example of third data transmitted from the edge module 24 to the controller 3.

The reception function unit F31 receives the response data transmitted from the edge module 24 via the communication network 4. It then obtains a fourth timestamp corresponding to the time at which the response data was received.

The controller 3 includes an abnormality detection function unit F36. Based on the received response data, the function unit F36 determines whether communication between the controller 3 and the edge module 24 was successfully performed without abnormality. Specifically, it checks whether both the transmission of control data and the reception of the corresponding response data were completed without excessive delay.

The abnormality detection function unit F36 determines whether communication with the edge module 24 was successfully performed based on at least one of the following: (i) the presence of the serial number in the response data, and (ii) the difference between the third and fourth timestamps. More specifically, the function unit determines that an abnormality has occurred if at least one of the following conditions is met: (i) the serial number in the response data is missing, or (ii) the difference between the third and fourth timestamps exceeds a predetermined delay threshold. If such abnormalities are detected a predetermined number of times (e.g., once or multiple times), the function unit determines that an emergency condition exists.

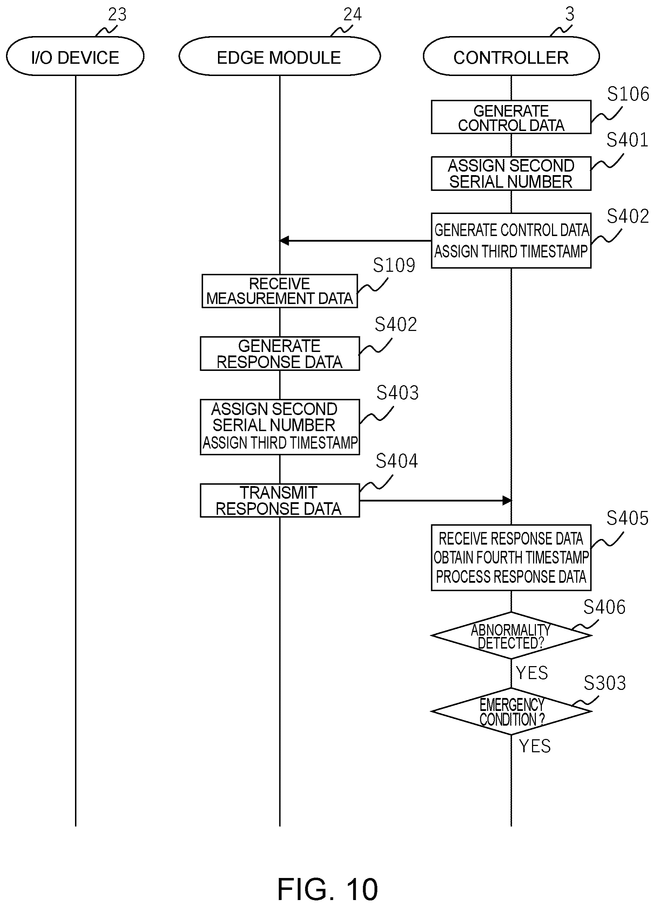

FIG. 10 is a sequence diagram illustrating the operation of the remote control system 1A according to the present embodiment. With reference to FIG. 10, an example of its operation will be described. Operations prior to Step S105 are the same as those in FIG. 4 and are omitted. For steps having the same function units as those in previously described sequence diagrams, the same reference numerals are used, and redundant explanations are omitted or simplified as appropriate.

First, the controller 3, functioning as the control data generation function unit F33, generates control data for controlling the target device 21 (Step S106). Then, still functioning as the control data generation function unit F33, the controller 3 assigns a second serial number to the control data (Step S401).

Next, controller 3 functions as the transmission function unit part F34 to transmit the control data to the edge module 24. At this time, the transmission time is assigned to the control data as the third time and transmitted (S402). Then, the receiving part 243 receives the control data (step S109).

Next, the response data generator 247 generates response data in response to the reception of the control data (Step S402). It then assigns the second serial number and the third timestamp to the response data (Step S403). Finally, the transmitter 242 transmits the response data to the controller 3 (Step S404).

Next, the controller 3, functioning as the reception function unit F31, receives the response data and obtains a fourth timestamp corresponding to the reception time. Then, functioning as the calculation function unit F32, the controller 3 processes the response data (Step S405).

Next, the controller 3, functioning as the abnormality detection function unit F36, determines whether the edge module 24 has successfully received the control data. If an abnormality is detected, the process proceeds to Step S303 (Step S406: Yes). The subsequent processing is the same as that shown in FIG. 8 and is therefore omitted.

As described above, according to the second embodiment, it is possible for the controller 3 to confirm that communication with the edge module 24 has been successfully performed.

It should be noted that the present invention is not limited to the embodiments described above, and various modifications may be made to the constituent elements without departing from the scope of the invention. In addition, various inventions may be formed by appropriately combining a plurality of components disclosed in the above embodiments. For example, it is also possible to provide a configuration in which some of the components described in a given embodiment are omitted. Furthermore, components described in different embodiments may be combined as appropriate.

This embodiment may also be configured as follows.

### [Item 1]

An edge module comprising:
a data generator configured to generate first data including a serial number;
a transmitter configured to assign a first timestamp to the first data and transmit the first data to a controller;
a receiver configured to receive second data generated by the controller based on the first data, the second data including the serial number and the first timestamp, and to obtain a second timestamp corresponding to a time at which the second data was received; and
an abnormality detector configured to determine whether communication with the controller was successfully performed based on at least one of: the serial number included in the second data, and a difference between the first timestamp included in the second data and the second timestamp.

### [Item 2]

The edge module according to item 1,
wherein the abnormality detector determines that communication with the controller has not been successfully performed when at least one of the following conditions is satisfied:
(i) the serial number included in the second data is missing; or
(ii) the difference between the first timestamp and the second timestamp exceeds a predetermined delay threshold.

### [Item 3]

The edge module according to item 1 or 2,
wherein the abnormality detector determines that an emergency condition exists when communication with the controller has not been successfully performed a predetermined number of times.

### [Item 4]

The edge module according to any one of items 1 to 3,
wherein the transmitter transmits the first data to the controller via the Internet,
and the receiver receives the second data from the controller via the Internet.

### [Item 5]

The edge module according to claim 4,
wherein the controller is a virtual machine on a cloud.

### [Item 6]

A control system comprising:
an edge module according to claim 1;
a target device to be controlled; and
a measurement device configured to measure values related to control of the target device,
wherein the first data is measurement data measured by the measurement device, and
the second data is control data for controlling the target device.

### [Item 7]

A remote control system comprising:
the control system according to claim 6; and
a controller,
wherein the transmitter of the edge module transmits the first data to the controller via the Internet,
the receiver of the edge module receives the second data from the controller via the Internet,
the controller is implemented as a virtual machine on a cloud, and
the controller comprises:
   a reception function unit configured to receive the first data;
   a control data generation function unit configured to generate the second data based on the first data; and
   a transmission function unit configured to transmit the second data to the edge module.

### [Item 8]

The remote control system according to claim 7,
wherein generation of the second data by the control data generation function unit and transmission of the second data to the edge module by the transmission function unit are performed in different scan cycles.

### [Item 9]

The remote control system according to claim 7,
wherein the edge module further includes an abnormality notification generator configured to generate an abnormality notification when the abnormality detector determines that communication with the controller has not been successfully performed,
the transmitter transmits the abnormality notification to the controller,
the reception function unit of the controller receives the abnormality notification, and
the controller further includes a status determination function unit configured to determine that an emergency condition exists when a number of received abnormality notifications reaches a predetermined threshold.

### [Item 10]

A controller comprising:
a control data generation function unit configured to generate second data including a serial number;
a transmission function unit configured to assign a third timestamp to the second data, and transmit the second data to an edge module;
a reception function unit configured to receive third data generated by the edge module based on the second data, the third data including the serial number and the third timestamp, and to obtain a fourth timestamp corresponding to a time at which the third data was received; and
an abnormality detection function unit configured to determine whether communication with the edge module was successfully performed based on at least one of: the serial number included in the third data, and a difference between the third timestamp included in the third data and the fourth timestamp.

### [Item 11]

The controller according to claim 10,
wherein the abnormality detection function unit determines that communication with the edge module has not been successfully performed when at least one of the following conditions is satisfied:
(i) the serial number included in the third data is missing; or
(ii) the difference between the third and fourth timestamps exceeds a predetermined delay threshold.

### [Item 12]

The controller according to item 10 or 11, wherein the controller is implemented as a virtual machine on a cloud.

### [Item 13]

A communication method comprising:
generating first data including a serial number;
assigning a first timestamp to the first data and transmitting the first data to a controller;
receiving second data generated by the controller based on the first data, the second data including the serial number and the first timestamp, and obtaining a second timestamp corresponding to a time at which the second data was received; and
determining, based on at least one of the serial number included in the second data and a difference between the first timestamp included in the second data and the second timestamp, whether communication with the controller was successfully performed.

### [Item 14]

A communication method comprising:
generating second data including a serial number;
assigning a third timestamp to second data and transmitting the second data to an edge module;
receiving third data generated by the edge module based on the second data, the third data including a serial number and the third timestamp, and obtaining a fourth timestamp corresponding to a time at which the third data was received; and
determining, based on at least one of the serial number included in the third data and a difference between the third timestamp included in the third data and the fourth timestamp, whether communication with the edge module was successfully performed.

### [Description of Reference Numerals]

1, 1A Remote control system
2, 2_1 to 2_N Control system
3, 3_1 to 3_M Controller
4 Communication network
21 Target device
22 Sensor (measurement device)
23 I/O device
24 Edge module
241 Measurement data generator
242 Transmitter
243 Receiver
244 Abnormality detector
245 Control signal generator
246 Abnormality notification generator
247 Response data generator
F31 Reception function unit
F32 Calculation function unit
F33 Control data generation function unit
F34 Transmission function unit
F34 Control data generation function unit
F35 Status determination function unit
F36 Abnormality detection function unit

## Claims

1. An edge module comprising:
a data generator configured to generate first data including a serial number;
a transmitter configured to assign a first timestamp to the first data and transmit the first data to a controller;
a receiver configured to receive second data generated by the controller based on the first data, the second data including the serial number and the first timestamp, and to obtain a second timestamp corresponding to a time at which the second data was received; and
an abnormality detector configured to determine whether communication with the controller was successfully performed based on at least one of: the serial number included in the second data, and a difference between the first timestamp included in the second data and the second timestamp.

2. The edge module according to claim 1,
wherein the abnormality detector determines that communication with the controller has not been successfully performed when at least one of the following conditions is satisfied:
(i) the serial number included in the second data is missing; or
(ii) the difference between the first timestamp and the second timestamp exceeds a predetermined delay threshold.

3. The edge module according to claim 1,
wherein the abnormality detector determines that an emergency condition exists when communication with the controller has not been successfully performed a predetermined number of times.

4. The edge module according to claim 1,
wherein the transmitter transmits the first data to the controller via the Internet,
and the receiver receives the second data from the controller via the Internet.

5. The edge module according to claim 4,
wherein the controller is a virtual machine on a cloud.

6. A control system comprising:
an edge module according to claim 1;
a target device to be controlled; and
a measurement device configured to measure values related to control of the target device,
wherein the first data is measurement data measured by the measurement device, and
the second data is control data for controlling the target device.

7. A remote control system comprising:
the control system according to claim 6; and
a controller,
wherein the transmitter of the edge module transmits the first data to the controller via the Internet,
the receiver of the edge module receives the second data from the controller via the Internet,
the controller is implemented as a virtual machine on a cloud, and
the controller comprises:
a reception function unit configured to receive the first data;
a control data generation function unit configured to generate the second data based on the first data; and
a transmission function unit configured to transmit the second data to the edge module.

8. The remote control system according to claim 7,
wherein generation of the second data by the control data generation function unit and transmission of the second data to the edge module by the transmission function unit are performed in different scan cycles.

9. The remote control system according to claim 7,
wherein the edge module further includes an abnormality notification generator configured to generate an abnormality notification when the abnormality detector determines that communication with the controller has not been successfully performed,
the transmitter transmits the abnormality notification to the controller,
the reception function unit of the controller receives the abnormality notification, and
the controller further includes a status determination function unit configured to determine that an emergency condition exists when a number of received abnormality notifications reaches a predetermined threshold.

10. A controller comprising:
a control data generation function unit configured to generate second data including a serial number;
a transmission function unit configured to assign a third timestamp to the second data, and transmit the second data to an edge module;
a reception function unit configured to receive third data generated by the edge module based on the second data, the third data including the serial number and the third timestamp, and to obtain a fourth timestamp corresponding to a time at which the third data was received; and
an abnormality detection function unit configured to determine whether communication with the edge module was successfully performed based on at least one of: the serial number included in the third data, and a difference between the third timestamp included in the third data and the fourth timestamp.

11. The controller according to claim 10,
wherein the abnormality detection function unit determines that communication with the edge module has not been successfully performed when at least one of the following conditions is satisfied:
(i) the serial number included in the third data is missing; or
(ii) the difference between the third and fourth timestamps exceeds a predetermined delay threshold.

12. The controller according to claim 10, wherein the controller is implemented as a virtual machine on a cloud.

13. A communication method comprising:
generating first data including a serial number;
assigning a first timestamp to the first data and transmitting the first data to a controller;
receiving second data generated by the controller based on the first data, the second data including the serial number and the first timestamp, and obtaining a second timestamp corresponding to a time at which the second data was received; and
determining, based on at least one of the serial number included in the second data and a difference between the first timestamp included in the second data and the second timestamp, whether communication with the controller was successfully performed.

14. A communication method comprising:
generating second data including a serial number;
assigning a third timestamp to second data and transmitting the second data to an edge module;
receiving third data generated by the edge module based on the second data, the third data including a serial number and the third timestamp, and obtaining a fourth timestamp corresponding to a time at which the third data was received; and
determining, based on at least one of the serial number included in the third data and a difference between the third timestamp included in the third data and the fourth timestamp, whether communication with the edge module was successfully performed.
